# EUROPEAN PATENT SPECIFICATION

(11) **EP 3 893 178 B1**
(45) Date of publication and mention of the grant of the patent: **07.02.2024**
(21) Application number: 20777894.5
(22) Date of filing: 02.01.2020
(51) Int. Cl.: G06F 21/64, G06Q 20/06, H04L 9/32, G06Q 20/02, G06Q 20/38, G06Q 20/40, G06Q 30/06, G06Q 40/00, H04L 9/00, H04L 9/40

(54) **BLIND SIGNATURE-BASED TRANSACTION METHOD AND DEVICE**
VERFAHREN UND VORRICHTUNG FÜR BLINDSIGNATURBASIERTE TRANSAKTION
PROCÉDÉ ET DISPOSITIF DE TRANSACTION REPOSANT SUR UNE SIGNATURE MASQUÉE

(30) Priority: 22.03.2019 CN 201910223566
(43) Date of publication of application: 13.10.2021
(73) Proprietor: Beijing Wodong Tianjun Information Technology Co., Ltd., 100176 Beijing (CN)
(72) Inventor: ZHANG, Lin, Beijing 100176 (CN); HUANG, Haiquan, Beijing 100176 (CN); SUN, Haibo, Beijing 100176 (CN)
(74) Representative: Barker Brettell LLP
(86) International application number: PCT/CN2020/070109
(87) International publication number: WO 2020/192236

(56) References cited:
- HEILMAN ETHAN ET AL: "Blindly Signed Contracts: Anonymous On-Blockchain and Off-Blockchain Bitcoin Transactions", 31 August 2016 (2016-08-31), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 43 - 60, XP047354483, ISBN: 978-3-540-74549-5 [retrieved on 2016-08-31] * Sections 1-4 *

## Description

### TECHNICAL FIELD

Embodiments of the present application relate to the field of computer technologies, and in particular, to a transaction method and apparatus based on blind signature.

### BACKGROUND

A blockchain is a disintermediation database, and in a transaction process based on the blockchain, the blockchain provides a publicly visible, tamper-resistant and decentralized system for both transaction parties.

In the prior art, when a transaction is performed based on the blockchain, both transaction parties upload transaction related information including address information of both transaction parties to the blockchain, and nodes in the blockchain verify the transaction according to the transaction related information, and control a completion of the transaction after a verification is passed.

However, according to the address information, an eavesdropper can acquire private information of both transaction parties, thereby causing a security problem in the transaction process.

HEILMAN ETHAN ET AL: "Blindly Signed Contracts: Anonymous On-Blockchain and Off-Blockchain Bitcoin Transactions" discloses solutions to the anonymity problem for both transactions on Bitcoin's blockchain and off the blockchain (in so called micropayment channel networks).

### SUMMARY

Embodiments of the present application provide a transaction method and apparatus based on blind signature, so as to overcome a security problem existing in both transaction parties in a blockchain transaction process. The invention is set out in the appended set of claims. Embodiments not falling under the scope of the appended claims are to be considered merely as examples suitable for understanding the invention.

According to a first aspect, an embodiment of the present application provides a transaction method based on blind signature, including:
receiving, by a currency providing node, a first signature request sent by a payment client, where the first signature request carries a blinding result, and the blinding result is a result obtained by the payment client performing blinding processing according to a transaction service parameter and signature data;
signing, by the currency providing node, the blinding result to obtain a first signature result, and sending the first signature result to the payment client; and
receiving, by the currency providing node, signature data and a second signature result sent by a payee client, and completing a transaction after the signature data and the second signature result are verified successfully, where the signature data and the second signature result are sent by the payment client to the payee client, and the second signature result is a result obtained by de-blinding the first signature result.

According to the invention, before the receiving, by the currency providing node, the first signature request sent by the payment client, further including:
receiving, by the currency providing node, a second signature request sent by the payment client, where the second signature request carries the transaction service parameter;
signing, by the currency providing node, the transaction service parameter to obtain a third signature result; and
sending, by the currency providing node, the third signature result to the payment client;
correspondingly, the blinding result is a result obtained by the payment client performing blinding processing according to the third signature result and the signature data.

In a possible design, before the completing, by the currency providing node, the transaction after the signature data and the second signature result are verified successfully, further including:
determining, by the currency providing node, that the signature data received from the payee client is not in a signature data list; and
verifying, by the currency providing node, the second signature result and the signature data according to a preset model to obtain a successful verification result.

In a possible design, the verifying, by the currency providing node, the second signature result and the signature data according to the preset model to obtain the successful verification result includes:
using, by the currency providing node, the second signature result and the signature data as inputs of the preset model; and
determining, by the currency providing node, whether the preset model satisfies an equation relationship, and if yes, determining that a verification is passed.

In a possible design, before the receiving, by the currency providing node, the first signature request sent by the payment client, further including:
receiving, by the currency providing node, a digital asset sent by the payment client; and
the completing, by the currency providing node, the transaction after the signature data and the second signature result are verified successfully includes:
   paying, by the currency providing node, the digital asset to the payee client.

According to a second aspect, an embodiment of the present application provides a transaction method based on blind signature, including:
performing, by a payment client, blinding processing according to a transaction service parameter and signature data to obtain a blinding result;
sending, by the payment client, a first signature request to a currency providing node, where the first signature request carries the blinding result;
receiving, by the payment client, a first signature result sent by the currency providing node, where the first signature result is a result obtained by the currency providing node signing the blinding result; and
de-blinding, by the payment client, the first signature result to obtain a second signature result, and sending the second signature result and the signature data to a payee client.

According to the invention, before the performing, by the payment client, the blinding processing according to the transaction service parameter and the signature data to obtain the blinding result, further including:
sending, by the payment client, a second signature request to the currency providing node, where the second signature request carries the transaction service parameter;
receiving, by the payment client, a third signature result sent by the currency providing node, where the third signature result is a result obtained by the currency providing node signing the transaction service parameter; and
the performing, by the payment client, the blinding processing according to the transaction service parameter and the signature data to obtain the blinding result includes:
   performing, by the payment client, blinding processing according to the third signature result and the signature data to obtain the blinding result.

In a possible design, before the performing, by the payment client, the blinding processing according to the transaction service parameter and the signature data to obtain the blinding result, further including:
sending, by the payment client, a digital asset to the currency providing node.

According to a third aspect, an embodiment of the present application provides a transaction apparatus based on blind signature, including:
a receiving module, configured to receive, by a currency providing node, a first signature request sent by a payment client, where the first signature request carries a blinding result, and the blinding result is a result obtained by the payment client performing blinding processing according to a transaction service parameter and signature data;
a signing module, configured to sign, by the currency providing node, the blinding result to obtain a first signature result, and send the first signature result to the payment client; and
a transacting module, configured to receive, by the currency providing node, signature data and a second signature result sent by a payee client, and complete a transaction after the signature data and the second signature result are verified successfully, where the signature data and the second signature result are sent by the payment client to the payee client, and the second signature result is a result obtained by de-blinding the first signature result.

According to the invention, the receiving module is further configured to:
receive, by the currency providing node, a second signature request sent by the payment client, where the second signature request carries the transaction service parameter;
sign, by the currency providing node, the transaction service parameter to obtain a third signature result; and
send, by the currency providing node, the third signature result to the payment client;
correspondingly, the blinding result is a result obtained by the payment client performing blinding processing according to the third signature result and the signature data.

In a possible design, the receiving module is further configured to:
determine, by the currency providing node, that the signature data received from the payee client is not in a signature data list; and
verify, by the currency providing node, the second signature result and the signature data according to a preset model to obtain a successful verification result.

In a possible design, the transacting module is specifically configured to:
use, by the currency providing node, the second signature result and the signature data as inputs of the preset model; and
determine, by the currency providing node, whether the preset model satisfies an equation relationship, and if yes, determine that a verification is passed.

In a possible design, the receiving module is further configured to:
receive, by the currency providing node, a digital asset sent by the payment client; and
the transacting module is further configured to:
   pay, by the currency providing node, the digital asset to the payee client.

According to a fourth aspect, an embodiment of the present application provides a transaction apparatus based on blind signature, including:
a blinding module, configured to perform, by a payment client, blinding processing according to a transaction service parameter and signature data to obtain a blinding result;
a sending module, configured to send, by the payment client, a first signature request to a currency providing node, where the first signature request carries the blinding result;
a receiving module, configured to receive, by the payment client, the first signature result sent by the currency providing node, where the first signature result is a result obtained by the currency providing node signing the blinding result; and
a de-blinding module, configured to de-blind, by the payment client, the first signature result to obtain a second signature result, and send the second signature result and the signature data to a payee client.

According to the invention, the sending module is further configured to:
send, by the payment client, a second signature request to the currency providing node, where the second signature request carries the transaction service parameter;
receive, by the payment client, a third signature result sent by the currency providing node, where the third signature result is a result obtained by the currency providing node signing the transaction service parameter; and
the blinding module is specifically configured to:
   perform, by the payment client, blinding processing according to the third signature result and the signature data to obtain the blinding result.

In a possible design, the sending module is specifically configured to:
send, by the payment client, a digital asset to the currency providing node.

According to a fifth aspect, an embodiment of the present application provides a transaction device based on blind signature, including:
a memory, configured to store a program; and
a processor, configured to execute the program stored in the memory, and when the program is executed, the processor is configured to execute the method according to the first aspect or various possible designs of the first aspect.

According to a sixth aspect, an embodiment of the present application provides a transaction device based on blind signature, including:
a memory, configured to store a program; and
a processor, configured to execute the program stored in the memory, and when the program is executed, the processor is configured to execute the method according to the second aspect or various possible designs of the second aspect.

According to a seventh aspect, an embodiment of the present application provides a computer readable storage medium, including instructions, which when run on a computer, enable the computer to execute the method according to the first aspect or various possible designs of the first aspect.

According to an eighth aspect, an embodiment of the present application provides a computer readable storage medium, including instructions, which when run on a computer, enable the computer to execute the method according to the second aspect or various possible designs of the second aspect.

Embodiments of the present application provide a transaction method and apparatus based on blind signature, where the method includes: the payment client performs blinding processing according to the transaction service parameter and the signature data to obtain the blinding result. The payment client sends the first signature request to the currency providing node, where the first signature request carries the blinding result. The currency providing node receives the first signature request sent by the payment client, and signs the blinding result to obtain the first signature result. The currency providing node sends the first signature result to the payment client. The payment client receives the first signature result sent by the currency providing node. The payment client de-blinds the first signature result to obtain the second signature result, and sends the second signature result and the signature data to the payee client. The payee client sends the second signature result and the signature data to the currency providing node. The currency providing node receives the signature data and the second signature result sent by the payee client, and completes the transaction after the signature data and the second signature result are verified successfully, where the signature data and the second signature result are sent by the payment client to the payee client, and the second signature result is a result obtained by de-blinding the first signature result. The signature data is performed blinding processing by the payment client, and the currency providing node signs the blinding result, thereby realizing protection of the signature data, and the currency providing node cannot associate a signature with the payment client, thereby realizing protection of the information of the payment client, avoiding a security problem caused by the eavesdropper acquiring private information of both transaction parties, thereby improving security of the transaction.

### BRIEF DESCRIPTION OF DRAWINGS

FIG. 1 is a first schematic system diagram of a transaction method based on blind signature according to an embodiment of the present application;
FIG. 2 is a second schematic system diagram of a transaction method based on blind signature according to an embodiment of the present application;
FIG. 3 is a first signaling flowchart of a transaction method based on blind signature according to an embodiment of the present application;
FIG. 4A and FIG. 4B are a second signaling flowchart of a transaction method based on blind signature according to an embodiment of the present application;
FIG. 5 is a first schematic structural diagram of a transaction apparatus based on blind signature according to an embodiment of the present application;
FIG. 6 is a second schematic structural diagram of a transaction apparatus based on blind signature according to an embodiment of the present application;
FIG. 7 is a first hardware structural diagram of a transaction device based on blind signature according to an embodiment of the present application; and
FIG. 8 is a second hardware structural diagram of a transaction device based on blind signature according to an embodiment of the present application.

### DESCRIPTION OF EMBODIMENTS

Firstly, the concept of a blockchain involved in the present application is explained.

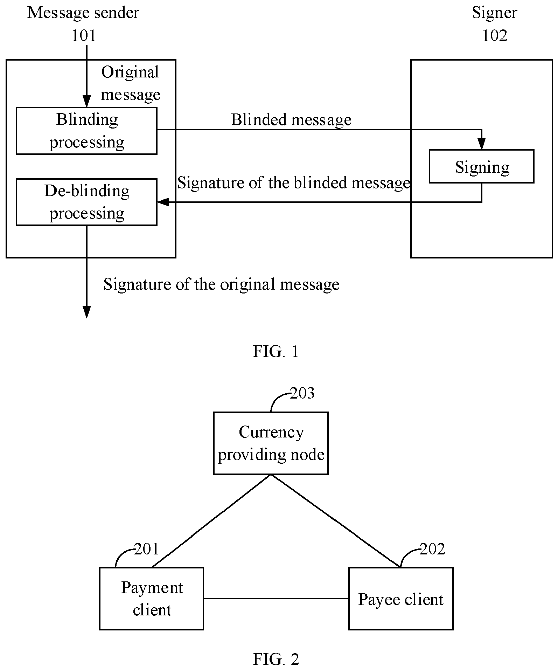

Blind signature is a method for signing a message. A message sender is allowed to perform blinding processing on an original message first, then a signer signs a blinded message, at last, the message sender performs de-blinding processing according to a de-blinding factor to obtain a signature of the signer with respect to the original message, where the de-blinding factor is a factor designed for the blinding processing, and can eliminate effects of the blinding processing. The blind signature is a special digital signature technology adopted by the message sender without allowing the signer to obtain specific contents of a signed message. The blind signature will be described in detail below with reference to FIG. 1.

FIG. 1 is a first schematic system diagram of a transaction method based on blind signature according to an embodiment of the present application. As shown in FIG. 1, a message sender 101 and a signer 102 are included, where the message sender 101 performs blinding processing on an original message. Specifically, the blinding processing refers to processing the original message according to a blinding factor. The blinding factor may be, for example, a password specific to the message sender 101, and may also be, for example, a series of computing parameters specific to the message sender 101. The blinding processing is not limited particularly in embodiments of the present application. Any processing which is performed on the original message to ensure that other people cannot acquire original contents all belongs to protection scope of the embodiments of the present embodiment. A person skilled in the art may understand that specific process of the blinding processing may be set as required.

Further, the message sender 101 sends the blinded message to the signer 102. The signer 102 signs the received blinded message. Specifically, the signature refers to a segment of numerical strings that can only be generated by the signer and cannot be forged. The segment of numerical strings provides a valid attestation of authenticity of the message signed by the signer. Specific signing manners are not limited particularly in the embodiments of the present application. During a signing process of the signer 102, because a signed content is a blinded message, thus, the signed specific contents cannot be obtained, thereby ensuring confidentiality of the signing process.

Specifically, after the signer 102 obtains the signature of the blinded message after the signing is completed, and further sends the signature to the message sender 101. The message sender 101 is further provided with a de-blinding factor which corresponds to the blinding factor, the de-blinding factor may be, for example, a decryption value of the password specific to the message sender 101, and may also be, for example, a reverse process parameter of the series of computing parameters specific to the message sender. The de-blinding processing is not limited particularly in the embodiments of the present application. Any processing that eliminates effects of the blinding processing all belongs to the protection scope of the embodiments of the present application.

In this embodiment, after de-blinding the signature of the blinded message, the signature of the original message is obtained, where the signed content of the original message is executed by the signer 102. However, during the signing process, the signer 102 cannot obtain the specific contents of the original message, and because the content signed by the signer 102 is the blinded message, thus, the signer 102 cannot associate the signed content with the message sender 101. Therefore, the blind signature guarantees protection of the original message content, meanwhile, realizes protection of identity of the message sender 101.

Regarding the blind signature, an illustrative visual description is given here: the blind signature is a person who needs to sign places a document to be signed and a copy paper into a sealed envelope (blinding processing) first, when the document is in the envelope, no one except the sealed person can open the envelope. The signer signs on the envelope, and the content of the signature is signed on the document through the copy paper. The person who needs to sign opens the envelope (de-blinding processing), and takes out the signed document, i.e. a blind signature process.

The blind signature should have the following properties:
unforgeability, in addition to the signer, any third party cannot generate a valid blind signature in the name of the signer;
non-repudiation, once the signer signs a certain message, the signer cannot deny his own signature of the message;
blindness, although the signer signs the certain message, the signer cannot obtain the specific contents of the message; and
untraceability, after the signature of the original message is published, the signer cannot be sure when he has signed the message.

An embodiment of the present application proposes a transaction method based on blind signature, and the transaction method based on blind signature provided by the embodiment of the present application is described in detail below with reference to specific embodiments. First, the description is made with reference to FIG. 2.

FIG. 2 is a second schematic system diagram of a transaction method based on blind signature according to an embodiment of the present application. As shown in FIG. 2, it includes a payment client 201, a payee client 202, and a currency providing node 203.

Specifically, when a transaction is performed, both transaction parties exist, namely a payer and a payee respectively, where the payment client 201 is a client used by the payer in the transaction, the payee client 202 is a client used by the payee in the transaction. The payment client 201 and the payee client 202 may be, for example, nodes in the blockchain, and specific implementation manners of the payment client 201 and the payee client 202 are not limited in the embodiments of the present application.

The blockchain is a special distributed database, any data can be written into the blockchain, and data can also be read from the blockchain, where any user can join the blockchain by using his own terminal device, and becomes a node therein, and the blockchain has characteristics of decentralization, trustlessness, and in which data cannot be tampered. When a user joins the blockchain through the payment client 201 or the payee client 202, the user becomes a node in the blockchain.

Further, during a transaction process, the payment client 201 may upload, for example, a digital asset to be transacted to the blockchain, and may perform, for example, blinding processing on transaction related data, which are not limited particularly in the embodiments of the present application. The payee client 202 may be configured to, for example, verify the transaction related data, and receive the digital asset to be transacted. Specific functions of the payee client 202 are not limited in the embodiments of the present application.

In this embodiment, the currency providing node 203 is further provided, where the currency providing node 203 is a node in the blockchain. The currency providing node 203 serves as an intermediate node for a transaction between the payment client 201 and the payee client 202, for example, it may be configured to store the digital asset to be transacted from the payment client 201, and it may also be configured to, for example, sign the transaction related data, etc. Specific implementation manners of the currency providing node 203 are not limited particularly in the embodiments of the present application.

Specifically, when a transaction needs to be performed, the payment client 201 sends the digital asset to be transacted to the currency providing node. Further, the payment client 201 sends the transaction related data to the currency providing node 203 for blind signature. The payment client 201 sends a signature result and the transaction related data to the payee client. The payee client and the currency providing node perform the verification according to the signature result and the transaction related data. Thus, it is determined whether the transaction is correct and valid, and when the verification is passed, the currency providing node 203 sends the digital asset to be transacted to the payee client 202 to complete the transaction.

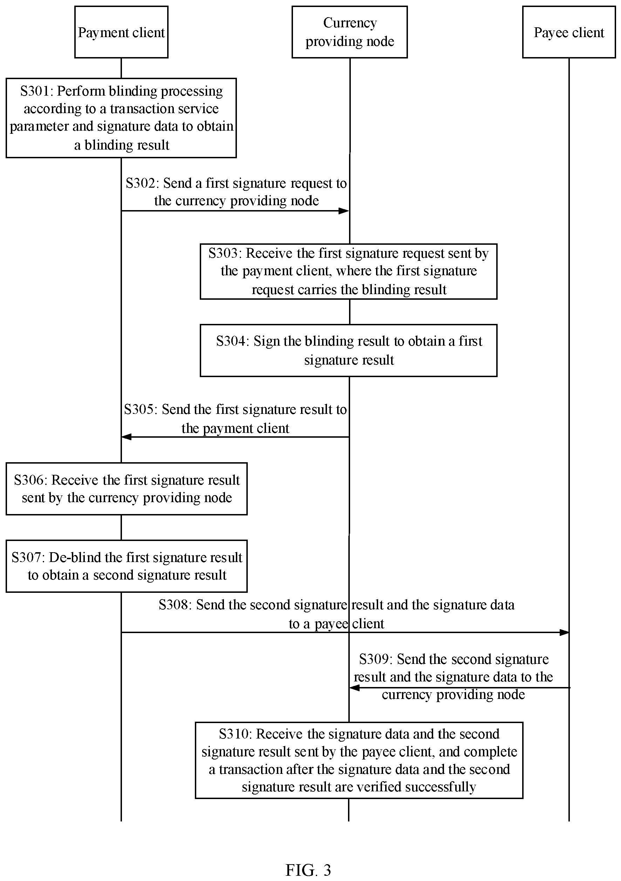

Based on a problem of security risks existing in the prior art caused by exposing private information of the payment client 201 and the payee client 202 during the transaction process, the embodiments of the present application provide a transaction method based on blind signature, which is further described in detail below with reference to FIG. 3.

FIG. 3 is a first signaling flowchart of a transaction method based on blind signature according to an embodiment of the present application. As shown in FIG. 3, the method includes:
S301: a payment client performs blinding processing according to a transaction service parameter and signature data to obtain a blinding result.

The transaction service parameter is configured to indicate transaction related data in a transaction process between the payment client and the payee client, for example, the transaction service parameter may include a transaction time, and may also include, for example, address information of both transaction parties, and may also be configured to, for example, specify an algorithm in a signature process. The transaction service parameter is not limited particularly in the embodiments of the present application. Any parameter for indicating the transaction process all belongs to the transaction service parameter. A person skilled in the art may understand that, the transaction service parameter may be set as required.

Further, the signature data is original data that needs to be signed, where the signature data may be, for example, a random number generated by the payment client for identifying a transaction, and may also be, for example, data generated by the payment client according to a preset rule, and the signature data is not limited particularly in the embodiments of the present application.

In this embodiment, the payment client performs blinding processing according to the transaction service parameter and the signature data. Specifically, the blinding processing may be, for example, the payment client performs a computation on the transaction service parameter and the signature data according to a blinding factor, and may also be, for example, the payment client performs a computation on the signature data according to processing result of the transaction service parameter by the currency providing node and the blinding factor. The specific implementation manners of the blinding processing are not limited in the embodiments of the present application.

The blinding factor has been introduced in the foregoing embodiment, and will not be repeated herein. During a process of performing the blinding processing, a specific computation, for example, may be performed according to a hash function, and may also be performed, for example, according to a preset formula, where a preset computation may include, for example, a combination of computing methods such as an addition, a subtraction and a multiplication. The specific implementation manners of the computation during the blinding processing are not limited in the embodiments of the present application. A person skilled in the art would understand that, the specific computation manners of the blinding processing can be set as required.

Further, after the blinding processing, a blinding result is obtained, where the blinding result corresponds to the signature data, and in addition to the payment client, any node in the blockchain cannot acquire the signature data corresponding to the blinding result.

S302: the payment client sends a first signature request to a currency providing node, where the first signature request carries the blinding result.

Specifically, the payment client sends the first signature request carrying the blinding result to the currency providing node, where the first signature request is configured to initiate a request for processing the blinding result to the currency providing node, optionally, the first signature request may further carry, for example, a signature algorithm specified by the payment client, and the specific implementation manners of the first signature request are not limited in the embodiments of the present application.

S303: the currency providing node receives the first signature request sent by the payment client, where the first signature request carries the blinding result, and the blinding result is a result obtained by the payment client performing blinding processing according to the transaction service parameter and the signature data.

S304: the currency providing node signs the blinding result to obtain a first signature result.

Further, the currency providing node receives the first signature request sent by the payment client, and signs the blinding result according to the first signature request. A specific implementation manner of the signature may be, for example, a hash signature, and may also be, for example, an asymmetric encryption signature. The specific implementation manner of the signature in the embodiment of the present application is not limited particularly. A person skilled in the art may understand that specific algorithms of the signature may be selected as required.

The blinding result is a result obtained by the payment client performing blinding processing according to the transaction service parameter and the signature data, therefore, the first signature result obtained by signing the blinding result is actually a signature for the transaction service parameter and the signature data. In a signing process, the currency providing node cannot obtain specific signature data, thereby ensuring security of the signature data.

S305: the currency providing node sends the first signature result to the payment client.

S306: the payment client receives the first signature result sent by the currency providing node, where the first signature result is a result obtained by the currency providing node signing the blinding result.

S307: the payment client de-blinds the first signature result to obtain a second signature result.

In this embodiment, the payment client receives the first signature result sent by the currency providing node, and de-blinds the first signature result, where de-blinding is a reverse process for the blinding processing, and can eliminate effects of the blinding processing. Specifically, the payment client processes the first signature result according to a de-blinding factor to obtain the second signature result. The de-blinding factor has been introduced in the foregoing embodiment, and will not be repeated herein. Specific implementation manners of the de-blinding are not limited in the embodiment of the present application.

Specifically, the blinding factor corresponds to the de-blinding factor, and only the payment client can acquire the blinding factor and the de-blinding factor, therefore, it can be ensured that the currency providing node cannot obtain the signature data in the signature process. Further, the first signature result is a result obtained by signing the blinding result by the currency providing node. After the payment client de-blinds the first signature result, the obtained second signature result eliminates a blinding effect. Therefore, the second signature result is a result obtained by the currency providing node performing signing directly according to the transaction service parameter and the signature data.

By performing the blind signature, it is possible to realize effectively that the currency providing node signs the transaction service parameter and the signature data, and the signature data cannot be acquired during the signature process, and the second signature result cannot be associated with the payment client.

S308: the payment client sends the second signature result and the signature data to a payee client.

S309: the payee client sends the second signature result and the signature data to the currency providing node.

Further, the payment client sends the second signature result and the signature data to the payee client, and the payee client further sends the second signature result and the signature data to the currency providing node, so as to verify whether the signature data and the second signature result are correct and valid.

Optionally, the payee client may further perform a verification according to the second signature result and the signature data. Specifically, the payee client may decrypt the second signature data according to, for example, a public key of the payment client, and determine whether a decryption result is consistent with the signature data, so as to determine whether a current transaction is valid, and further determine whether the current transaction is to be performed according to a verification result of the currency providing node.

S310: the currency providing node receives the signature data and the second signature result sent by the payee client, and completes a transaction after the signature data and the second signature result are verified successfully, where the signature data and the second signature result are sent by the payment client to the payee client, and the second signature result is a result obtained by de-blinding the first signature result.

In this embodiment, the currency providing node verifies the transaction according to the signature data and the second signature result sent by the payee client, where a specific manner of the verification may be, for example, performing reverse process computation on the second signature result according to a signature algorithm, and determining whether the obtained computing result is consistent with the signature data; and a verification manner may also be, for example, determining the signature data and the second signature result according to a preset model, and determining whether it complies with the preset model, where the preset model is a model obtained according to a signature. The specific implementation manner of the verification is not limited particularly in the embodiment of the present application.

Specifically, the second signature result is a result obtained by de-blinding the first signature result, and the first signature result is obtained by the currency providing node performing signing. Therefore, the second signature result is actually obtained by the currency providing node signing the signature data. Therefore, the currency providing node can realize the verification according to the signature data and the second signature result. When the verification is passed, the payment client realizes a payment, and the transaction is completed.

The transaction method based on blind signature according to the embodiment of the present application includes: the payment client performs blinding processing according to the transaction service parameter and the signature data to obtain the blinding result. The payment client sends the first signature request to the currency providing node, where the first signature request carries the blinding result. The currency providing node receives the first signature request sent by the payment client, and signs the blinding result to obtain the first signature result. The currency providing node sends the first signature result to the payment client. The payment client receives the first signature result sent by the currency providing node. The payment client de-blinds the first signature result to obtain the second signature result, and sends the second signature result and the signature data to the payee client. The payee client sends the second signature result and the signature data to the currency providing node. The currency providing node receives the signature data and the second signature result sent by the payee client, and completes the transaction after the signature data and the second signature result are verified successfully, where the signature data and the second signature result are sent by the payment client to the payee client, and the second signature result is a result obtained by de-blinding the first signature result. Blinding processing is performed on the signature data by the payment client, and the currency providing node signs the blinding result, thereby realizing protection of the signature data, and the currency providing node cannot associate the signature with the payment client, thereby realizing protection of information of the payment client, avoiding a security problem caused by an eavesdropper acquiring private information of both transaction parties, thereby improving security of the transaction.

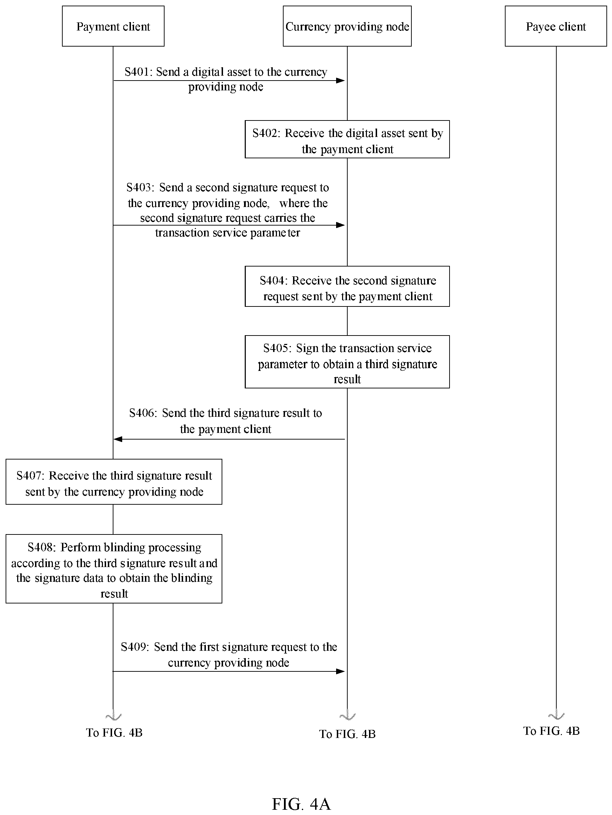

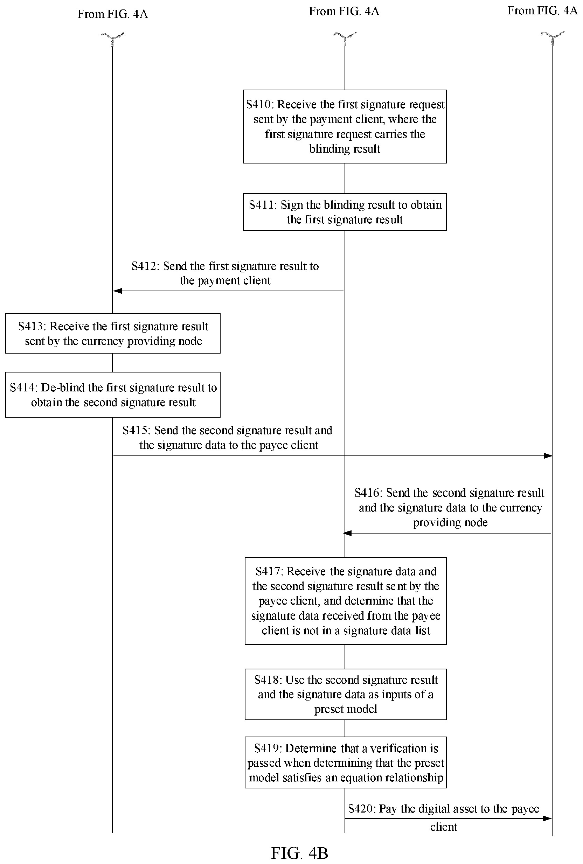

On the basis of the foregoing embodiment, the transaction method based on blind signature provided in the embodiments of the present application will be described in further detail below with reference to FIG. 4A and FIG. 4B.

FIG. 4A and FIG. 4B are a second signaling flowchart of a transaction method based on blind signature according to an embodiment of the present application. As shown in FIG. 4A and FIG. 4B, the method includes:
S401: the payment client sends a digital asset to the currency providing node.

Specifically, in the transaction process, a payer needs to pay a certain amount of digital assets to a payee to complete the transaction. In this embodiment, the payment client sends the digital assets to the currency providing node, and the currency providing node serves as an intermediate node of the transaction, similar to the existence of a bank. In the embodiment of the present application, the currency providing node is also a node in the blockchain.

S402: the currency providing node receives the digital asset sent by the payment client.

In this embodiment, the currency providing node stores the digital asset of the payment client.

Optionally, the currency providing node further needs to generate a public key and a private key, where the private key is generated randomly, and only the currency providing node knows its own private key, where the public key is generated according to the private key. The remaining nodes in the blockchain can obtain the public key of the currency providing node, and data is encrypted by using the public key of the currency providing node, and then encrypted data is sent to the currency providing node.

Further, the currency providing node can realize decryption of the data by using the private key, data interaction between nodes is realized by using the public key and the private key, and the data is prevented from being acquired by other nodes. In the embodiment of the present application, a public key and a private key are adopted to realize signing of the transaction service parameter and the signature data.

S403: the payment client sends a second signature request to the currency providing node, where the second signature request carries the transaction service parameter.

In this embodiment, the payment client sends the second signature request carrying the transaction service parameter to the currency providing node, where the transaction service parameter has been introduced in the foregoing embodiment, and will not be repeated herein. Further, the second signature request is configured to instruct the currency providing node to perform signature processing on the transaction service parameter, the second signature request may further carry, for example, a specified signature algorithm or an additional condition of the payment client. The specific implementation manner of the second signature request in the embodiment of the present application is not limited particularly.

S404: the currency providing node receives the second signature request sent by the payment client, where the second signature request carries the transaction service parameter.

S405: the currency providing node signs the transaction service parameter to obtain a third signature result.

Further, the currency providing node signs the transaction service parameter according to the second signature request sent by the payment client, where a specific signing manner may be, for example, signing according to an algorithm specified in the transaction service parameter, and may also be, for example, signing according to a preset algorithm, and a specific implementation manner of the signature is not particularly limited in the embodiment of the present application.

Signing processing is performed on the transaction service parameter by the currency providing node, and this transaction can be identified effectively, so as to verify validity of the transaction subsequently.

S406: the currency providing node sends the third signature result to the payment client.

S407: the payment client receives the third signature result sent by the currency providing node, where the third signature result is a result obtained by the currency providing node signing the transaction service parameter.

S408: the payment client performs blinding processing according to the third signature result and the signature data to obtain the blinding result.

In this embodiment, the payment client receives the third signature result sent by the currency providing node. Further, the blinding processing is performed according to the third signature result and the signature data to obtain the blinding result. The blinding processing refers to processing the signature data according to a blinding factor. The blinding factor may be, for example, a random number, and may also be, for example, data generated according to a preset algorithm. The embodiment of the present application is not limited thereto, and the blinding factor is a first random number and a second random number that are generated randomly, which is taken as an example below for introduction.

When the blinding processing is performed, for example, a final commitment value may be generated according to the third signature result, the first random number and the second random number, where the final commitment value is configured to indicate generation of the blinding result. Further, for example, a hash computation may be performed according to the signature data and the final commitment value to obtain a challenge value, and a computation on the signature data is added when the challenge value is computed, where the challenge value is also configured to indicate the generation of the blinding result. In the embodiment of the present application, the signature data is a generated random number to identify a transaction.

Secondly, the blinding result is obtained according to the challenge value and the second random number. A specific implementation manner of obtaining the final commitment value, the challenge value and the blinding result may be, for example, a combination of various basic computations, it may also be, for example, a combination of a plurality of algorithms, and the embodiment of the present application do not limit the computation manner thereof particularly. A person skilled in the art would understand that a specific implementation manner for computing the final commitment value, the challenge value and the blinding result can be set as required, as long as the signature data can be blinded.

Correspondingly, in the embodiment of the present application, the blinding result is a result obtained by the payment client performing blinding processing according to the third signature result and the signature data.

S409: the payment client sends the first signature request to the currency providing node, where the first signature request carries the blinding result.

Specifically, the implementation manner of S409 is similar to that of S302, which is not described herein again.

S410: the currency providing node receives the first signature request sent by the payment client, where the first signature request carries the blinding result, and the blinding result is a result obtained by the payment client performing blinding processing according to the transaction service parameter and the signature data.

S411: the currency providing node signs the blinding result to obtain the first signature result.

Specifically, the implementation manners of S410 and S411 are similar to those of S303 and S304, which are not described herein again.

S412: the currency providing node sends the first signature result to the payment client.

S413: the payment client receives the first signature result sent by the currency providing node, where the first signature result is a result obtained by the currency providing node signing the blinding result.

S414: the payment client de-blinds the first signature result to obtain the second signature result.

Specifically, the implementation manners of S412, S413, and S414 are similar to those of S305, S306, and S307, which are not described herein again.

S415: the payment client sends the second signature result and the signature data to the payee client.

S416: the payee client sends the second signature result and the signature data to the currency providing node.

Specifically, the implementation manners of S415 and S416 are similar to those of S308 and S309, which are not described herein again.

S417: the currency providing node receives the signature data and the second signature result sent by the payee client, and determines that the signature data received from the payee client is not in a signature data list.

In the embodiment of the present application, the currency providing node stores the signature data in a verified transaction to obtain the signature data list. Further, in the embodiment, the signature data is a random number generated by the payment client, and the random number may be, for example, 256 bits, and may identify one transaction uniquely, which is merely illustrative and is not limited particularly herein.

Further, the currency providing node performs a search according to the signature data sent by the payee client and the signature data list, and determines whether the signature data sent by the payee client exits in the signature data list; if yes, it is considered that a transaction corresponding to the signature data sent by the payee client is completed, that is, the payment client has paid the digital asset in the transaction. Thus, a double-spending problem is avoided effectively, that is, a problem that the payment client attempts to complete two transactions with one digital asset is avoided.

Optionally, if it is determined that the signature data received from the payee client is not in the signature data list, it can be determined that a transaction corresponding to current signature data has not occurred, that is, the current transaction is valid, so as to perform subsequent signature verification.

S418: the currency providing node uses the second signature result and the signature data as inputs of a preset model.

S419: the currency providing node determines that the verification is passed when determining that the preset model satisfies an equation relationship.

Further, in the embodiment of the present application, the preset model is provided, where the preset model is a model composed of the public key, the second signature result, the signature data, and preset parameters of the currency providing node, and is configured to verify signature correctness of the second signature result and the signature data, where the specific designs of the preset model correspond to the foregoing processing of the signature algorithm. The specific designs of the preset model are not limited particularly in the embodiment of the present application. A person skilled in the art would understand that the design of the preset model can be selected according to actual needs.

Specifically, the preset model is configured to verify whether a current second signature result is obtained by the currency providing node signing the signature data and the transaction service parameter. The second signature result is a result obtained by de-blinding the first signature result, essentially, is a result obtained by the currency providing node signing the signature data directly. Therefore, the currency providing node uses the second signature result and the signature data as the inputs of the preset model. When the signature data and the second signature result are accurate, the equation relationship of the preset model can be satisfied, and if it is determined that the equation relationship are satisfied, then, it is determined that the verification is passed, that is, the currency providing node verifies that the second signature result is obtained by performing, by itself, signing according to the transaction service parameter and the signature data.

S420: the currency providing node pays the digital asset to the payee client.

Further, after the verification is passed, the currency providing node determines that the transaction is true and valid, and pays the digital asset sent by the payer to the payee, thereby completing the transaction.

The transaction method based on blind signature according to the embodiment of the present application includes: the payment client sends the digital asset to the currency providing node. The currency providing node receives the digital asset sent by the payment client. The payment client sends the second signature request to the currency providing node, where the second signature request carries the transaction service parameter. The currency providing node receives the second signature request sent by the payment client, where the second signature request carries the transaction service parameter. The currency providing node signs the transaction service parameter to obtain the third signature result. The currency providing node sends the third signature result to the payment client. The payment client receives the third signature result sent by the currency providing node. The payment client performs the blinding processing according to the third signature result and the signature data to obtain the blinding result. The payment client sends the first signature request to the currency providing node, where the first signature request carries the blinding result. The currency providing node receives the first signature request sent by the payment client. The currency providing node signs the blinding result to obtain the first signature result. The currency providing node sends the first signature result to the payment client. The payment client receives the first signature result sent by the currency providing node. The payment client de-blinds the first signature result to obtain the second signature result. The payment client sends the second signature result and the signature data to the payee client. The payee client sends the second signature result and the signature data to the currency providing node. The currency providing node receives the signature data and the second signature result sent by the payee client, and determines that the signature data received from the payee client is not in the signature data list. The currency providing node uses the second signature result and the signature data as the inputs of the preset model. The currency providing node determines whether the preset model satisfies the equation relationship, and if yes, determines that the verification is passed. The currency providing node pays the digital asset to the payee client. The signature message and the transaction service parameter are processed by the payment client, which guarantees security of transaction data during the transaction, and implements identity protection of the payment client, and verifies the signature data by setting the signature data list by the currency providing node, thereby guaranteeing authenticity and validity of the transaction effectively.

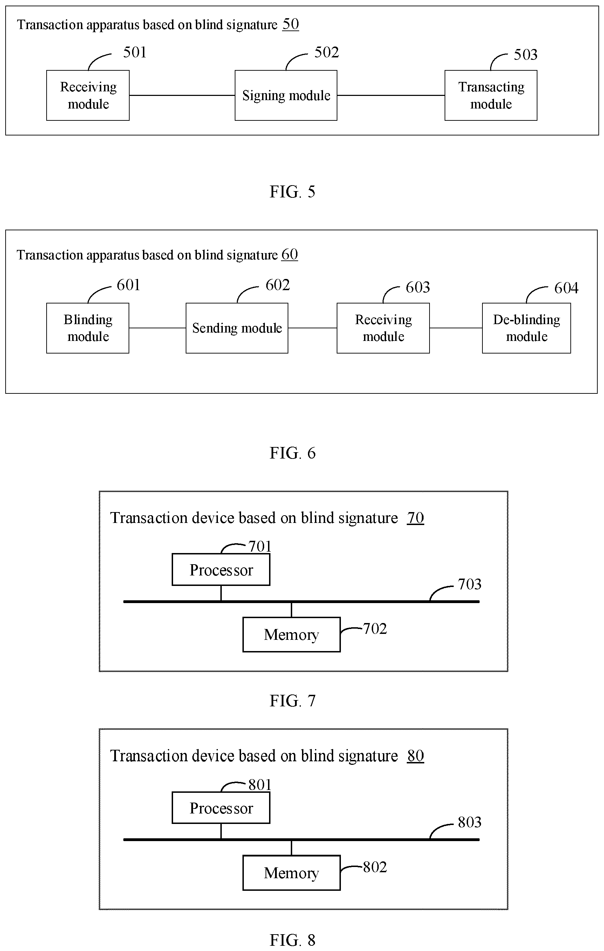

FIG. 5 is a first schematic structural diagram of a transaction apparatus based on blind signature according to an embodiment of the present application. As shown in FIG. 5, the transaction apparatus 50 based on blind signature includes: a receiving module 501, a signing module 502 and a transacting module 503.

The receiving module 501 is configured to receive, by a currency providing node, a first signature request sent by a payment client, where the first signature request carries a blinding result, and the blinding result is a result obtained by the payment client performing blinding processing according to a transaction service parameter and signature data;
the signing module 502 is configured to sign, by the currency providing node, the blinding result to obtain a first signature result, and send the first signature result to the payment client; and
the transacting module 503 is configured to receive, by the currency providing node, signature data and a second signature result sent by a payee client, and complete a transaction after the signature data and the second signature result are verified successfully, where the signature data and the second signature result are sent by the payment client to the payee client, and the second signature result is a result obtained by de-blinding the first signature result.

Optionally, the receiving module 501 is further configured to:
receive, by the currency providing node, a second signature request sent by the payment client, where the second signature request carries the transaction service parameter;
sign, by the currency providing node, the transaction service parameter to obtain a third signature result; and
send, by the currency providing node, the third signature result to the payment client;
correspondingly, the blinding result is a result obtained by the payment client performing blinding processing according to the third signature result and the signature data.

Optionally, the receiving module 501 is further configured to:
determine, by the currency providing node, that the signature data received from the payee client is not in a signature data list; and
verify, by the currency providing node, the second signature result and the signature data according to a preset model to obtain a successful verification result.

Optionally, the transacting module 503 is specifically configured to:
use, by the currency providing node, the second signature result and the signature data as inputs of the preset model; and
determine, by the currency providing node, whether the preset model satisfies an equation relationship, and if yes, determine that a verification is passed.

Optionally, the receiving module 501 is further configured to:
receive, by the currency providing node, a digital asset sent by the payment client; and
the transacting module 503 is further configured to:
   pay, by the currency providing node, the digital asset to the payee client.

The apparatus provided in the embodiments may be configured to execute technical solutions of the foregoing method embodiments, and implementation principles and technical effects thereof are similar, which are not described herein again in this embodiment.

FIG. 6 is a second schematic structural diagram of a transaction apparatus based on blind signature according to an embodiment of the present application. As shown in FIG. 6, the transaction apparatus 60 based on blind signature includes: a blinding module 601, a sending module 602, a receiving module 603 and a de-blinding module 604.

The blinding module 601 is configured to perform, by a payment client, blinding processing according to a transaction service parameter and signature data to obtain a blinding result;
the sending module 602 is configured to send, by the payment client, a first signature request to a currency providing node, where the first signature request carries the blinding result;
the receiving module 603 is configured to receive, by the payment client, the first signature result sent by the currency providing node, where the first signature result is a result obtained by the currency providing node signing the blinding result; and
the de-blinding module 604 is configured to de-blind, by the payment client, the first signature result to obtain a second signature result, and send the second signature result and the signature data to a payee client.

The sending module 602 is further configured to:
send, by the payment client, a second signature request to the currency providing node, where the second signature request carries the transaction service parameter;
receive, by the payment client, a third signature result sent by the currency providing node, where the third signature result is a result obtained by the currency providing node signing the transaction service parameter; and
the blinding module 601 is specifically configured to:
   perform, by the payment client, blinding processing according to the third signature result and the signature data to obtain the blinding result.

The sending module 602 is specifically configured to:
send, by the payment client, a digital asset to the currency providing node.

The apparatus provided in the embodiments may be configured to execute technical solutions of the foregoing method embodiments, and implementation principles and technical effects thereof are similar, which are not described herein again in the embodiments.

FIG. 7 is a first hardware structural diagram of a transaction device based on blind signature according to an embodiment of the present application. As shown in FIG. 7, the transaction device 70 based on blind signature of the embodiment includes: a processor 701 and a memory 702, where
the memory 702 is configured to store computer execution instructions; and
the processor 701 is configured to execute the computer execution instructions stored in the memory to implement each step executed by the transaction method based on blind signature in the foregoing embodiments. For details, reference may be made to the related description in the foregoing method embodiments.

Optionally, the memory 702 may be independent or integrated with the processor 701.

When the memory 702 is set independently, the transaction device based on blind signature further includes a bus 703 for connecting the memory 702 and the processor 701.

FIG. 8 is a second hardware structural diagram of a transaction device based on blind signature according to an embodiment of the present application. As shown in FIG. 8, the transaction device 80 based on blind signature of the embodiment includes: a processor 801 and a memory 802, where
the memory 802 is configured to store computer execution instructions; and
the processor 801 is configured to execute the computer execution instructions stored in the memory to implement each step executed by the transaction method based on blind signature in the foregoing embodiments. For details, reference may be made to the related description in the foregoing method embodiments.

Optionally, the memory 802 may be independent or integrated with the processor 801.

When the memory 802 is set independently, the transaction device based on blind signature further includes a bus 803 for connecting the memory 802 and the processor 801.

An embodiment of the present application further provides a computer readable storage medium, in which computer execution instructions is stored in the computer readable storage medium, and when a processor executes the computer execution instructions, the above transaction method based on blind signature executed by the transaction device based on blind signature is implemented.

In several embodiments provided in the present application, it should be understood that, the disclosed device and method may be implemented in other manners. For example, the device embodiments described above are merely schematic, for example, a division of the modules is merely a logical function division, and there may be another division manner in actual implementation, for example, a plurality of modules may be combined or integrated into another system, or some features may be ignored or not performed. In addition, the displayed or discussed mutual coupling or direct coupling or communication connection may be indirect coupling or communication connection through some interfaces, apparatuses or modules, and may be electrical, mechanical or in other forms.

The integrated modules implemented in a form of a software function module may be stored in a computer readable storage medium. The software function module is stored in a storage medium, and includes a plurality of instructions for enabling a computer device (which may be a personal computer, a server, or a network device) or a processor to execute partial steps of the method described in each embodiment of the present application.

It should be understood that, the above processor may be a central processing unit (CPU for short), and may also be other general processors, digital signal processors (DSP for short), application specific integrated circuits (ASIC for short), etc. The general processor may be a microprocessor or the processor may also be any conventional processor or the like. The steps of the method disclosed in connection with the present invention may be directly embodied as executed by a hardware processor, or executed by a combination of hardware and software modules in the processor.

The memory may include a high-speed random access memory (RAM), and may also include a non-volatile memory (NVM), for example, at least one disk memory, and may also be a U-disk, a mobile hard disk, a read-only memory, a magnetic disk, or an optical disk.

The bus may be an industry standard architecture (ISA) bus, a peripheral component interconnect (PCI) bus, an extended industry standard architecture (EISA) bus, or the like. The bus may be divided into an address bus, a data bus, a control bus, etc. For ease of illustration, the bus in the drawings of the present application is not limited to only one bus or one type of bus.

The storage medium may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk. The storage medium may be any available medium that is accessible to a general or specific computer.

A person of ordinary skill in the art may understand that, all or part of the steps of the foregoing method embodiments may be implemented by a program instruction related hardware. The foregoing program may be stored in a computer readable storage medium. When the program is executed, the steps including the foregoing method embodiments are executed. The storage medium includes any medium that can store program codes, such as a ROM, a RAM, a magnetic disk, or an optical disk.

Finally, it should be noted that, the above embodiments are merely used for describing the technical solutions of the present application, and are not limited thereto. Although the present application is described in detail with reference to the foregoing embodiments, it should be understood by those skilled in the art that, the technical solutions described in the foregoing embodiments can still be modified, or equivalent replacements can be made to some or all of the technical features. These amendments or replacements do not depart from the scope of the technical solutions of the embodiments of the present application. The invention is defined by the appended claims.

## Claims

1. A transaction method based on blind signature, which is applied to a blockchain, wherein the method comprises:
receiving (S303, S410), by a currency providing node, a first signature request sent by a payment client, wherein the first signature request carries a blinding result, and the blinding result is a result obtained by the payment client performing blinding processing on a transaction service parameter and signature data;
signing (S304, S411), by the currency providing node, the blinding result to obtain a first signature result, and sending the first signature result to the payment client; and
receiving (S310, S417), by the currency providing node, signature data and a second signature result sent by a payee client, and completing a transaction after the signature data and the second signature result are verified successfully, wherein the signature data and the second signature result are sent by the payment client to the payee client, and the second signature result is a result obtained by de-blinding the first signature result;
wherein before the receiving (S303, S410), by the currency providing node, the first signature request sent by the payment client, further comprising:
receiving (S404), by the currency providing node, a second signature request sent by the payment client, wherein the second signature request carries the transaction service parameter;
signing (S405), by the currency providing node, the transaction service parameter to obtain a third signature result; and
sending (S406), by the currency providing node, the third signature result to the payment client;
correspondingly, the blinding result is a result obtained by the payment client performing blinding processing according to the third signature result and the signature data.

2. The method according to claim 1, wherein before the completing (S310, S417), by the currency providing node, the transaction after the signature data and the second signature result are verified successfully, further comprising:
determining, by the currency providing node, that the signature data received from the payee client is not in a signature data list; and
verifying, by the currency providing node, the second signature result and the signature data according to a preset model to obtain a successful verification result.

3. The method according to claim 2, wherein the verifying, by the currency providing node, the second signature result and the signature data according to the preset model to obtain the successful verification result comprises:
using (S418), by the currency providing node, the second signature result and the signature data as inputs of the preset model; and
determining, by the currency providing node, whether the preset model satisfies an equation relationship, and if yes, determining that a verification is passed.

4. The method according to any one of claims 1 to 3, wherein before the receiving (S303, S410), by the currency providing node, the first signature request sent by the payment client, further comprising:
receiving (S402), by the currency providing node, a digital asset sent by the payment client; and
the completing (S310, S417), by the currency providing node, the transaction after the signature data and the second signature result are verified successfully comprises:
paying (S420), by the currency providing node, the digital asset to the payee client.

5. A transaction method based on blind signature, which is applied to a blockchain, wherein the method comprises:
performing (S301), by a payment client, blinding processing on a transaction service parameter and signature data to obtain a blinding result;
sending (S302), by the payment client, a first signature request to a currency providing node, wherein the first signature request carries the blinding result;
receiving (S306), by the payment client, the first signature result sent by the currency providing node, wherein the first signature result is a result obtained by the currency providing node signing the blinding result; and
de-blinding (S307), by the payment client, the first signature result to obtain a second signature result, and sending the second signature result and the signature data to a payee client;
wherein before the performing (S301), by the payment client, the blinding processing according to the transaction service parameter and the signature data to obtain the blinding result, further comprising:
sending (S403), by the payment client, a second signature request to the currency providing node, wherein the second signature request carries the transaction service parameter;
receiving (S407), by the payment client, a third signature result sent by the currency providing node, wherein the third signature result is a result obtained by the currency providing node signing the transaction service parameter; and
the performing (S301), by the payment client, the blinding processing according to the transaction service parameter and the signature data to obtain the blinding result comprises:
performing (S408), by the payment client, blinding processing according to the third signature result and the signature data to obtain the blinding result.

6. The method according to claim 5, wherein before the performing (S301), by the payment client, the blinding processing according to the transaction service parameter and the signature data to obtain the blinding result, further comprising:
sending (S401), by the payment client, a digital asset to the currency providing node.

7. A transaction apparatus based on blind signature (50), which is applied to a blockchain, comprising:
a receiving module (501), configured to receive, by a currency providing node, a first signature request sent by a payment client, wherein the first signature request carries a blinding result, and the blinding result is a result obtained by the payment client performing blinding processing on a transaction service parameter and signature data;
a signing module (502), configured to sign, by the currency providing node, the blinding result to obtain a first signature result, and send the first signature result to the payment client; and
a transacting module (503), configured to receive, by the currency providing node, signature data and a second signature result sent by a payee client, and complete a transaction after the signature data and the second signature result are verified successfully, wherein the signature data and the second signature result are sent by the payment client to the payee client, and the second signature result is a result obtained by de-blinding the first signature result;
wherein the receiving module (501) is further configured to:
receive, by the currency providing node, a second signature request sent by the payment client, wherein the second signature request carries the transaction service parameter;
sign, by the currency providing node, the transaction service parameter to obtain a third signature result; and
send, by the currency providing node, the third signature result to the payment client;
correspondingly, the blinding result is a result obtained by the payment client performing blinding processing according to the third signature result and the signature data.

8. The apparatus (50) according to claim 7, wherein the receiving module (501) is further configured to:
determine, by the currency providing node, that the signature data received from the payee client is not in a signature data list; and
verify, by the currency providing node, the second signature result and the signature data according to a preset model to obtain a successful verification result.

9. The apparatus (50) according to claim 8, wherein the transacting module (503) is specifically configured to:
use, by the currency providing node, the second signature result and the signature data as inputs of the preset model; and
determine, by the currency providing node, whether the preset model satisfies an equation relationship, and if yes, determine that a verification is passed.

10. The apparatus (50) according to any one of claims 7 to 9, wherein the receiving module (501) is further configured to:
receive, by the currency providing node, a digital asset sent by the payment client; and
the transacting module (503) is further configured to:
pay, by the currency providing node, the digital asset to the payee client.

11. A transaction apparatus (60) based on blind signature, which is applied to a blockchain, comprising:
a blinding module (601), a sending module (602), a receiving module (603) and a de-blinding module (604), the modules are configured to execute the method according to any claim 5 or 6.

12. A computer readable storage medium, comprising instructions, which when run on a computer, enable the computer to execute the method according to any one of claims 1 to 4, or execute the method according to claim 5 or 6.

## Patentansprüche

1. Transaktionsverfahren auf der Grundlage von Blindsignatur, das auf eine Blockchain angewendet wird, wobei das Verfahren folgende Vorgänge umfasst:
Empfangen (S303, S410), durch einen währungsbereitstellenden Knoten, einer ersten Signaturanforderung, die von einem Zahlungsclient gesendet wird, wobei die erste Signaturanforderung ein Verblindungsergebnis trägt und das Verblindungsergebnis ein Ergebnis ist, das vom Zahlungsclient erhalten wird, der Verblindungsverarbeitung an einem Transaktionsdienstparameters und von Signaturdaten durchführt;
Signieren (S304, S411), durch den währungsbereitstellenden Knoten, des Verblindungsergebnisses zum Erhalten eines ersten Signaturergebnisses, und Senden des ersten Signaturergebnisses an den Zahlungsclient; und
Empfangen (S310, S417), durch den währungsbereitstellenden Knoten, von Signaturdaten und einem zweiten Signaturergebnis, die von einem Zahlungsempfängerclient gesendet werden, und Abschließen einer Transaktion, nachdem die Signaturdaten und das zweite Signaturergebnis erfolgreich verifiziert wurden, wobei die Signaturdaten und das zweite Signaturergebnis vom Zahlungsclient an den Zahlungsempfängerclient gesendet werden und das zweite Signaturergebnis ein Ergebnis ist, das durch Entblindung des ersten Signaturergebnisses erhalten wird;
wobei das Verfahren vor dem Empfangen (S303, S410), durch den währungsbereitstellenden Knoten, der ersten Signaturanforderung, die vom Zahlungsclient gesendet wird, ferner umfasst:
Empfangen (S404), durch den währungsbereitstellenden Knoten, einer zweiten Signaturanforderung, die vom Zahlungsclient gesendet wird, wobei die zweite Signaturanforderung den Transaktionsdienstparameter trägt;
Signieren (S405), durch den währungsbereitstellenden Knoten, des Transaktionsdienstparameters zum Erhalten eines dritten Signaturergebnisses; und
Senden (S406), durch den währungsbereitstellenden Knoten, des dritten Signaturergebnisses an den Zahlungsclient;
entsprechend ist das Verblindungsergebnis ein Ergebnis,
das der Zahlungsclient beim Durchführen von Verblindungsverarbeitung gemäß dem dritten Signaturergebnis und den Signaturdaten erhält.

2. Verfahren nach Anspruch 1, wobei vor dem Abschließen (S310, S417), durch den währungsbereitstellenden Knoten, der Transaktion nach dem erfolgreichen Verifizieren der Signaturdaten und des zweiten Signaturergebnisses ferner folgende Vorgänge umfasst:
Bestimmen, durch den währungsbereitstellenden Knoten, dass die vom Zahlungsempfängerclient empfangenen Signaturdaten nicht in einer Signaturdatenliste enthalten sind; und
Verifizieren, durch den währungsbereitstellenden Knoten, des zweiten Signaturergebnisses und der Signaturdaten gemäß einem voreingestellten Modell zum Erhalten eines Ergebnisses mit erfolgreicher Verifizierung.

3. Verfahren nach Anspruch 2, wobei das Verifizieren, durch den währungsbereitstellenden Knoten, des zweiten Signaturergebnisses und der Signaturdaten gemäß dem voreingestellten Modell zum Erhalten eines Ergebnisses mit erfolgreicher Verifizierung umfasst:
Verwenden (S418), durch den währungsbereitstellenden Knoten, des zweiten Signaturergebnisses und der Signaturdaten als Eingaben des voreingestellten Modells; und
Bestimmen, durch den währungsbereitstellenden Knoten, ob das voreingestellte Modell eine Gleichungsbeziehung erfüllt, und wenn ja, Bestimmen, dass eine Verifizierung bestanden ist.

4. Verfahren nach einem der Ansprüche 1 bis 3, wobei das Verfahren vor dem Empfangen (S303, S410), durch den währungsbereitstellenden Knoten, der ersten Signaturanforderung, die vom Zahlungsclient gesendet wird, ferner umfasst:
Empfangen (S402), durch den währungsbereitstellenden Knoten, eines vom Zahlungsclient gesendeten digitalen Vermögenswertes; und
wobei das Abschließen (S310, S417), durch den währungsbereitstellenden Knoten, der Transaktion nach dem erfolgreichen Verifizieren der Signaturdaten und des zweiten Signaturergebnisses ferner folgenden Vorgang umfasst:
Auszahlen (S420), durch den währungsbereitstellenden Knoten, des digitalen Vermögenswertes an den Zahlungsempfängerclient.

5. Transaktionsverfahren auf der Grundlage von Blindsignatur, das auf eine Blockchain angewendet wird, wobei das Verfahren folgende Vorgänge umfasst:
Durchführen (S301), durch einen Zahlungsclient, von Verblindungsverarbeitung eines Transaktionsdienstparameters und von Signaturdaten zum Erhalten eines Verblindungsergebnisses;
Senden (S302), durch den Zahlungsclient, einer ersten Signaturanforderung an einen währungsbereitstellenden Knoten, wobei die erste Signaturanforderung das Verblindungsergebnis trägt;
Empfangen (S306), durch den Zahlungsclient, des ersten Signaturergebnisses, das vom währungsbereitstellenden Knoten gesendet wird, wobei das erste Signaturergebnis ein Ergebnis ist, das durch den währungsbereitstellenden Knoten erhalten wird, der das Verblindungsergebnis signiert; und
Entblinden (S307), durch den Zahlungsclient, des ersten Signaturergebnisses zum Erhalten eines zweiten Signaturergebnisses, und Senden des zweiten Signaturergebnisses und der Signaturdaten an einen Zahlungsempfängerclient;
wobei das Verfahren vor dem Durchführen (S301), durch den Zahlungsclient, der Verblindungsverarbeitung gemäß dem Transaktionsdienstparameter und den Signaturdaten zum Erhalten des Verblindungsergebnisses ferner umfasst:
Senden (S403), durch den Zahlungsclient, einer zweiten Signaturanforderung an den währungsbereitstellenden Knoten, wobei die zweite Signaturanforderung den Transaktionsdienstparameter trägt;
Empfangen (S407), durch den Zahlungsclient, eines dritten Signaturergebnisses, das vom währungsbereitstellenden Knoten gesendet wird, wobei das dritte Signaturergebnis ein Ergebnis ist, das durch den währungsbereitstellenden Knoten erhalten wird, der den Transaktionsdienstparameter signiert; und
wobei das Durchführen (S301), durch den Zahlungsclient, der Verblindungsverarbeitung gemäß dem Transaktionsdienstparameter und den Signaturdaten zum Erhalten des Verblindungsergebnisses umfasst:
Durchführen (S408), durch den Zahlungsclient, von Verblindungsverarbeitung gemäß dem dritten Signaturergebnis und den Signaturdaten zum Erhalten des Verblindungsergebnisses.

6. Verfahren nach Anspruch 5, wobei das Verfahren vor dem Durchführen (S301), durch den Zahlungsclient, der Verblindungsverarbeitung gemäß dem Transaktionsdienstparameter und den Signaturdaten zum Erhalten des Verblindungsergebnisses ferner umfasst:
Senden (S401), durch den Zahlungsclient, eines digitalen Vermögenswertes an den währungsbereitstellenden Knoten.

7. Transaktionsvorrichtung auf der Grundlage von Blindsignatur (50), die auf eine Blockchain angewendet wird, folgende Elemente umfassend:
ein Empfangsmodul (501), das dafür ausgelegt ist, durch einen währungsbereitstellenden Knoten eine erste Signaturanforderung zu empfangen, die von einem Zahlungsclient gesendet wird, wobei die erste Signaturanforderung ein Verblindungsergebnis trägt und das Verblindungsergebnis ein Ergebnis ist, das vom Zahlungsclient erhalten wird, der Verblindungsverarbeitung an einem Transaktionsdienstparameters und von Signaturdaten durchführt;
ein Signiermodul (502), das dafür ausgelegt ist, durch den währungsbereitstellenden Knoten das Verblindungsergebnis zum Erhalten eines ersten Signaturergebnisses zu signieren und das erste Signaturergebnis an den Zahlungsclient zu senden; und
ein Transaktionsmodul (503), das dafür ausgelegt ist, durch den währungsbereitstellenden Knoten Signaturdaten und ein zweites Signaturergebnis zu empfangen, die von einem Zahlungsempfängerclient gesendet werden, und eine Transaktion abzuschließen, nachdem die Signaturdaten und das zweite Signaturergebnis erfolgreich verifiziert wurden, wobei die Signaturdaten und das zweite Signaturergebnis vom Zahlungsclient an den Zahlungsempfängerclient gesendet werden und das zweite Signaturergebnis ein Ergebnis ist, das durch Entblindung des ersten Signaturergebnisses erhalten wird;
wobei das Empfangsmodul (501) ferner für folgende Vorgänge ausgelegt ist:
Empfangen, durch den währungsbereitstellenden Knoten, einer zweiten Signaturanforderung, die vom Zahlungsclient gesendet wird, wobei die zweite Signaturanforderung den Transaktionsdienstparameter trägt;
Signieren, durch den währungsbereitstellenden Knoten, des Transaktionsdienstparameters zum Erhalten eines dritten Signaturergebnisses; und
Senden, durch den währungsbereitstellenden Knoten, des dritten Signaturergebnisses an den Zahlungsclient; entsprechend ist das Verblindungsergebnis ein Ergebnis, das der Zahlungsclient beim Durchführen von Verblindungsverarbeitung gemäß dem dritten Signaturergebnis und den Signaturdaten erhält.

8. Vorrichtung (50) nach Anspruch 7, wobei das Empfangsmodul (501) ferner für folgende Vorgänge ausgelegt ist:
Bestimmen, durch den währungsbereitstellenden Knoten, dass die vom Zahlungsempfängerclient empfangenen Signaturdaten nicht in einer Signaturdatenliste enthalten sind; und
Verifizieren, durch den währungsbereitstellenden Knoten, des zweiten Signaturergebnisses und der Signaturdaten gemäß einem voreingestellten Modell zum Erhalten eines Ergebnisses mit erfolgreicher Verifizierung.

9. Vorrichtung (50) nach Anspruch 8, wobei das Transaktionsmodul (503) spezifisch für folgende Vorgänge ausgelegt ist:
Verwenden, durch den währungsbereitstellenden Knoten, des zweiten Signaturergebnisses und der Signaturdaten als Eingaben des voreingestellten Modells; und
Bestimmen, durch den währungsbereitstellenden Knoten, ob das voreingestellte Modell eine Gleichungsbeziehung erfüllt, und wenn ja, Bestimmen, dass eine Verifizierung bestanden ist.

10. Vorrichtung (50) nach einem der Ansprüche 7 bis 9, wobei das Empfangsmodul (501) ferner für folgende Vorgänge ausgelegt ist:
Empfangen, durch den währungsbereitstellenden Knoten, eines vom Zahlungsclient gesendeten digitalen Vermögenswertes; und
das Transaktionsmodul (503) ferner für folgenden Vorgang ausgelegt ist:
Auszahlen, durch den währungsbereitstellenden Knoten, des digitalen Vermögenswertes an den Zahlungsempfängerclient.

11. Transaktionsvorrichtung (60) auf der Grundlage von Blindsignatur, die auf eine Blockchain angewendet wird, umfassend:
ein Verblindungsmodul (601), ein Sendemodul (602), ein Empfangsmodul (603) und ein Entblindungsmodul (604), wobei die Module dafür ausgelegt sind, das Verfahren nach einem der Ansprüche 5 oder 6 durchzuführen.

12. Computerlesbares Speichermedium, umfassend Anweisungen, die bei ihrer Ausführung auf einem Computer den Computer in die Lage versetzen, das Verfahren nach einem der Ansprüche 1 bis 4 oder das Verfahren nach Anspruch 5 oder 6 durchzuführen.

## Revendications

1. Procédé de transaction basé sur signature masquée, lequel est appliqué à une blockchain, dans lequel le procédé comprend :
la réception (S303, S410), par un noeud fournisseur de devises, d'une première demande de signature envoyée par un client payeur, dans lequel la première demande de signature est porteuse d'un résultat de masquage, et le résultat de masquage est un résultat obtenu par le client payeur qui réalise un traitement de masquage sur un paramètre de service de transaction et des données de signature ;
la signature (S304, S411), par le noeud fournisseur de devises, du résultat de masquage pour obtenir un premier résultat de signature, et l'envoi du premier résultat de signature au client payeur ; et
la réception (S310, S417), par le noeud fournisseur de devises, de données de signature et d'un deuxième résultat de signature envoyés par un client bénéficiaire, et la menée à terme d'une transaction après que les données de signature et le deuxième résultat de signature ont fait l'objet d'une vérification réussie, dans lequel les données de signature et le deuxième résultat de signature sont envoyés par le client payeur au client bénéficiaire, et le deuxième résultat de signature est un résultat obtenu en démasquant le premier résultat de signature ;
dans lequel, avant la réception (S303, S410), par le noeud fournisseur de devises, de la première demande de signature envoyée par le client payeur, comprenant en outre :
la réception (S404), par le noeud fournisseur de devises, d'une seconde demande de signature envoyée par le client payeur, dans lequel la seconde demande de signature est porteuse du paramètre de service de transaction ;
la signature (S405), par le noeud fournisseur de devises, du paramètre de service de transaction pour obtenir un troisième résultat de signature ; et
l'envoi (S406), par le noeud fournisseur de devises, du troisième résultat de signature au client payeur ;
corrélativement, le résultat de masquage est un résultat obtenu par le client payeur qui réalise un traitement de masquage conformément au troisième résultat de signature et aux données de signature.

2. Procédé selon la revendication 1, dans lequel, avant la menée à terme (S310, S417), par le noeud fournisseur de devises, de la transaction après que les données de signature et le deuxième résultat de signature ont fait l'objet d'une vérification réussie, comprenant en outre
la détermination, par le noeud fournisseur de devises, du fait que les données de signature reçues depuis le client bénéficiaire ne sont pas dans une liste de données de signature ; et
la vérification, par le noeud fournisseur de devises, du deuxième résultat de signature et des données de signature conformément à un modèle prédéfini pour obtenir un résultat de vérification réussie.

3. Procédé selon la revendication 2, dans lequel la vérification, par le noeud fournisseur de devises, du deuxième résultat de signature et des données de signature conformément au modèle prédéfini pour obtenir le résultat de vérification réussie comprend :
l'utilisation (S418), par le noeud fournisseur de devises, du deuxième résultat de signature et des données de signature en tant qu'entrées du modèle prédéfini ; et
la détermination, par le noeud fournisseur de devises, de si le modèle prédéfini satisfait une relation équationnelle et si la réponse est oui, la détermination du fait qu'une vérification est réussie.

4. Procédé selon l'une quelconque des revendications 1 à 3, dans lequel, avant la réception (S303, S410), par le noeud fournisseur de devises, de la première demande de signature envoyée par le client payeur, comprenant en outre :
la réception (S402), par le noeud fournisseur de devises, d'un actif numérique envoyé par le client payeur ; et
la menée à terme (S310, S417), par le noeud fournisseur de devises, de la transaction après que les données de signature et le deuxième résultat de signature ont fait l'objet d'une vérification réussie comprend :
le paiement (S420), par le noeud fournisseur de devises, de l'actif numérique au client bénéficiaire.

5. Procédé de transaction basé sur signature masquée, lequel est appliqué à une blockchain, dans lequel le procédé comprend :
la réalisation (S301), par un client payeur, d'un traitement de masquage sur un paramètre de service de transaction et des données de signature pour obtenir un résultat de masquage ;
l'envoi (S302), par le client payeur, d'une première demande de signature à un noeud fournisseur de devises, dans lequel la première demande de signature est porteuse du résultat de masquage ;
la réception (S306), par le client payeur, du premier résultat de signature envoyé par le noeud fournisseur de devises, dans lequel le premier résultat de signature est un résultat obtenu par le noeud fournisseur de devises qui signe le résultat de masquage ; et
le démasquage (S307), par le client payeur, du premier résultat de signature pour obtenir un deuxième résultat de signature, et l'envoi du deuxième résultat de signature et des données de signature à un client bénéficiaire ;
dans lequel, avant la réalisation (S301), par le client payeur, du traitement de masquage conformément au paramètre de service de transaction et aux données de signature pour obtenir le résultat de masquage, comprenant en outre :
l'envoi (S403), par le client payeur, d'une seconde demande de signature au noeud fournisseur de devises, dans lequel la seconde demande de signature est porteuse du paramètre de service de transaction ;
la réception (S407), par le client payeur, d'un troisième résultat de signature envoyé par le noeud fournisseur de devises, dans lequel le troisième résultat de signature est un résultat obtenu par le noeud fournisseur de devises qui signe le paramètre de service de transaction ; et
la réalisation (S301), par le client payeur, du traitement de masquage conformément au paramètre de service de transaction et aux données de signature pour obtenir le résultat de masquage comprend :
la réalisation (S408), par le client payeur, d'un traitement de masquage conformément au troisième résultat de signature et aux données de signature pour obtenir le résultat de masquage.

6. Procédé selon la revendication 5, dans lequel, avant la réalisation (S301), par le client payeur, du traitement de masquage conformément au paramètre de service de transaction et aux données de signature pour obtenir le résultat de masquage, comprenant en outre :
l'envoi (S401), par le client payeur, d'un actif numérique au noeud fournisseur de devises.

7. Appareil de transaction basé sur signature masquée (50), lequel est appliqué à une blockchain, comprenant :
un module de réception (501) configuré pour recevoir, par un noeud fournisseur de devises, une première demande de signature envoyée par un client payeur, dans lequel la première demande de signature est porteuse d'un résultat de masquage, et le résultat de masquage est un résultat obtenu par le client payeur qui réalise un traitement de masquage sur un paramètre de service de transaction et des données de signature ;
un module de signature (502) configuré pour signer, par le noeud fournisseur de devises, le résultat de masquage pour obtenir un premier résultat de signature et pour envoyer le premier résultat de signature au client payeur ; et
un module de transaction (503) configuré pour recevoir, par le noeud fournisseur de devises, des données de signature et un deuxième résultat de signature envoyés par un client bénéficiaire et pour mener à terme une transaction après que les données de signature et le deuxième résultat de signature ont fait l'objet d'une vérification réussie, dans lequel les données de signature et le deuxième résultat de signature sont envoyés par le client payeur au client bénéficiaire, et le deuxième résultat de signature est un résultat obtenu en démasquant le premier résultat de signature ;
dans lequel le module de réception (501) est en outre configuré pour :
recevoir, par le noeud fournisseur de devises, une seconde demande de signature envoyée par le client payeur, dans lequel la seconde demande de signature est porteuse du paramètre de service de transaction ;
signer, par le noeud fournisseur de devises, le paramètre de service de transaction pour obtenir un troisième résultat de signature ; et
envoyer, par le noeud fournisseur de devises, le troisième résultat de signature au client payeur ;
corrélativement, le résultat de masquage est un résultat obtenu par le client payeur qui réalise un traitement de masquage conformément au troisième résultat de signature et aux données de signature.

8. Appareil (50) selon la revendication 7, dans lequel le module de réception (501) est en outre configuré pour
déterminer, par le noeud fournisseur de devises, que les données de signature reçues depuis le client bénéficiaire ne sont pas dans une liste de données de signature ; et
vérifier, par le noeud fournisseur de devises, le deuxième résultat de signature et les données de signature conformément à un modèle prédéfini pour obtenir un résultat de vérification réussie.

9. Appareil (50) selon la revendication 8, dans lequel le module de transaction (503) est configuré spécifiquement pour :
utiliser, par le noeud fournisseur de devises, le deuxième résultat de signature et les données de signature en tant qu'entrées du modèle prédéfini ; et
déterminer, par le noeud fournisseur de devises, si le modèle prédéfini satisfait une relation équationnelle et si la réponse est oui, déterminer qu'une vérification est réussie.

10. Appareil (50) selon l'une quelconque des revendications 7 à 9, dans lequel le module de réception (501) est en outre configuré pour :
recevoir, par le noeud fournisseur de devises, un actif numérique envoyé par le client payeur ; et
le module de transaction (503) est en outre configuré pour :
payer, par le noeud fournisseur de devises, l'actif numérique au client bénéficiaire.

11. Appareil de transaction (60) basé sur signature masquée, lequel est appliqué à une blockchain, comprenant :
un module de masquage (601), un module d'envoi (602), un module de réception (603) et un module de démasquage (604), les modules sont configurés pour exécuter le procédé selon l'une quelconque des revendications 5 ou 6.

12. Support de stockage lisible par ordinateur, comprenant des instructions qui, lorsqu'elles sont déroulées sur un ordinateur, permettent à l'ordinateur d'exécuter le procédé selon l'une quelconque des revendications 1 à 4 ou d'exécuter le procédé selon la revendication 5 ou 6.
